# EUROPEAN PATENT SPECIFICATION

(11) **EP 3 956 593 B1**
(45) Date of publication and mention of the grant of the patent: **04.01.2023**
(21) Application number: 19746459.7
(22) Date of filing: 25.07.2019
(51) Int. Cl.: F16L 33/22, F16B 41/00, F16L 25/00

(54) **HOSE CONNECTOR**
SCHLAUCHANSCHLUSS
RACCORD DE TUYAU

(30) Priority: 18.04.2019 DE 102019002829
(43) Date of publication of application: 23.02.2022
(73) Proprietor: HUSQVARNA AB, 561 82 Huskvarna (SE)
(72) Inventor: RENNER, Thomas, 89079 Ulm (DE)
(74) Representative: Finkele, Rolf
(86) International application number: PCT/EP2019/070129
(87) International publication number: WO 2020/211962

(56) References cited:
- EP-A1- 2 233 814
- EP-A1- 3 114 384
- US-B2- 7 431 351

## Description

### TECHNICAL FIELD

The present disclosure relates to a hose connector, and more particularly to a coupling mechanism of the hose connector.

### BACKGROUND

One of the necessities for home ownership is a hose for watering lawns, washing cars, etc. The hose is connected to a source of water supply such as a tap or a pump so that water can be delivered through the hose. A hose connector allows quick coupling of the hose with the source of water supply. The hose connector typically includes a body, a clamping nut, a clamping element, and a clamping ring. For coupling the hose with the hose connector, the clamping nut and the clamping ring are removed and coupled with the hose. More particularly, the hose first receives the clamping nut and then the clamping ring, after which the hose is coupled with the body. If the clamping ring and the clamping nut are not coupled in the correct order, the hose may not be properly coupled with the hose connector which in turn may cause incorrect operation of the hose connector. Such a hose connector having an additional clamping ring may not be user friendly and may be troublesome for an operator to install.

Additionally, a dismantling of the hose connector often poses problems as the clamping ring may unscrew during operation or may get stolen which in turn renders the hose connector unusable. In order to solve this issue, a cable tie may be used for installation of the hose connector. However, such cable ties may increase an overall cost of the hose connector which is not desirable.

US7431351B2 describes a method and apparatus for making a pressure-containing threaded tubular connection, suitable for remotely operated connection and separation, utilizing electrical heating to reduce the amount of make up torque required to produce reliable preloading of the connection. One aspect of the present invention comprises: 1) a first hub with male threads on its exterior and having a sealing face and axial flow passage, b) a second hub having an axial flow passage and carrying an annular seal which can be mated with the sealing face of the first hub and mounting a rotatable nut having female threads on its interior and integral nut heating means. After stabbing and initial make-up of the connection, the nut is heated and thereby expanded in a controlled manner and the connection retightened. Following cooling, the structural connection is fully preloaded and the annular seal fully compressed so that it seals. Reversing the procedure permits disconnection.

The hose connector of the European patent application EP 2 233 814 A1 exhibits a body and a clamping nut that exhibit cooperating windings to allow to screw the clamp nut onto the body. Further both exhibits complement catching elements as part of a coupling mechanism that holds the clamp nut on the body even when the two of them are unscrewed. To get the body and clamp nut in screwing connection the user has to align the threads of the two threaded portions so that they can interact with each other.

### SUMMARY

In view of the above, it is an objective of the present invention to solve or at least reduce the drawbacks discussed above. The objective is at least partially achieved by a hose connector, according to an embodiment of the present invention. The hose connector has a body. The body includes a first body portion and a second body portion disposed concentrically around the first body portion and defining a number of external threads.

The first body portion and the second body portion define a gap therebetween such that the gap is adapted to receive a hose therein. The hose connector also includes a clamping element coupled to the second body portion. The clamping element includes a number of clamping claws. The hose connector further includes a clamping nut having threads to engage with the second body portion via the external threads when threaded onto it. The clamping nut includes a tail portion such that in an engaged position of the clamping nut, the tail portion is adapted to apply force on the clamping element. Additionally, the hose connector includes a coupling mechanism for capturing the clamping nut with the second body portion. An inner diameter of the clamping nut is defined such that the clamping nut applies force on the clamping element in the engaged position. Further, the inner diameter of the clamping nut is defined such that the clamping nut does not apply force on the clamping element in a disengaged position.

The coupling mechanism includes at least one first rib extending from an inner surface of the clamping nut, wherein the at least one first rib extends circumferential on the clamping nut.

According to an embodiment of the present invention, the first rib is divided into a multitude of ribs, in particularly the first rib is divided into at least four ribs. Advantageously the division of the first rib into a multitude of ribs automatically generated free spaces between them and thus reduces the force needed to couple the hose connector's body with the clamping nut.

The coupling mechanism includes a plurality of cams defining a sloping surface. The at least one first rib is adapted to slide on the sloping surface of the plurality of cams for coupling the clamping nut with the second body portion. The height of the cams corresponds to the pitch of the adjacent external threads.

The coupling mechanism includes a plurality of cams circumferentially spaced apart from each other on the second body portion, each of the plurality of cams defining a sloping surface.

According to an embodiment of the present invention, the plurality of cams includes at least four cams.

According to an embodiment of the present invention, the at least one cam is triangular in shape.

According to an embodiment of the present invention, the coupling mechanism includes a second rib extending along a circumference of the second body portion.

According to an embodiment of the present invention, the second rib is embodied as a continuous rib.

According to an embodiment of the present invention, a length of the clamping nut is decided such that the clamping claws are in a retracted position when the second rib rests against the plurality of first ribs.

According to an embodiment of the present invention, the clamping nut includes internal threads that engage with external threads on the second body portion for threadably coupling the clamping nut with the second body portion. In exemplary embodiment the internal threads of the clamping nut and the external threads on the second body portion are embodied as sawtooth threads.

According to an embodiment of the present invention, the internal threads of the clamping nut are embodied as non-continuous threads.

According to an embodiment of the present invention, a clamping surface of the clamping nut is spaced apart from the clamping element when the clamping nut is coupled with the hose connector.

According to an embodiment of the present invention, a second gap is defined between the clamping element and the first body portion when the clamping nut is threaded onto the hose connector in a maximum tightened condition.

According to an embodiment of the present invention, a value of the first gap lies approximately between 0.75 mm and 1.5 mm.

The hose connector of the present invention provides improved functional reliability. The hose connector allows simplified assembly and disassembly and is simple to use. Additionally, the hose connector allows quick installation of the clamping nut with the second body portion as the clamping nut is captively connected to the body instead of using a clamping ring that uses a threaded connection. Also, the captive connection between the clamping nut and the body can be achieved without adding to an overall cost of the hose connector. Further, the hose connector provides improved product reliability as the hose connector does not include a separate clamping ring and thus any possibility of losing or unscrewing of the clamping ring is eliminated. The hose connector described herein does not require additional cable ties or other such components as the hose connector does not include the clamping ring.

Other features and aspects of this invention will be apparent from the following description and the accompanying drawings.

### BRIEF DESCRIPTION OF THE DRAWINGS

The invention will be described in more detail with reference to the enclosed drawings, wherein:
**FIG. 1** shows a sectional view of a hose connector, in accordance with an embodiment of the present invention;
**FIG. 2** shows a side view of a body and a clamping element of the hose connector, in accordance with an embodiment of the present invention;
**FIG. 3** shows a sectional view of a clamping nut of the hose connector, in accordance with an embodiment of the present invention; and
**FIG. 4** shows a perspective view of the hose connector, in accordance with an embodiment of the present invention; and
**FIG. 5** shows a perspective view of the hose connector, in accordance with an embodiment of the present invention.

### DESCRIPTION OF EMBODIMENTS

The present invention will be described more fully hereinafter with reference to the accompanying drawings, in which example embodiments of the invention incorporating one or more aspects of the present invention are shown. This invention may, however, be embodied in many different forms and should not be construed as limited to the embodiments set forth herein; rather, these embodiments are provided so that this disclosure will be thorough and complete, and will fully convey the scope of the invention to those skilled in the art. For example, one or more aspects of the present invention can be utilized in other embodiments and even other types of structures and/or methods. In the drawings, like numbers refer to like elements.

Certain terminology is used herein for convenience only and is not to be taken as a limitation on the invention. For example, "upper", "lower", "front", "rear", "side", "longitudinal", "lateral", "transverse", "upwards", "downwards", "forward", "backward", "sideward", "left," "right," "horizontal," "vertical," "upward", "inner", "outer", "inward", "outward", "top", "bottom", "higher", "above", "below", "central", "middle", "intermediate", "between", "end", "adjacent", "proximate", "near", "distal", "remote", "radial", "circumferential", or the like, merely describe the configuration shown in the Figures. Indeed, the components may be oriented in any direction and the terminology, therefore, should be understood as encompassing such variations unless specified otherwise.

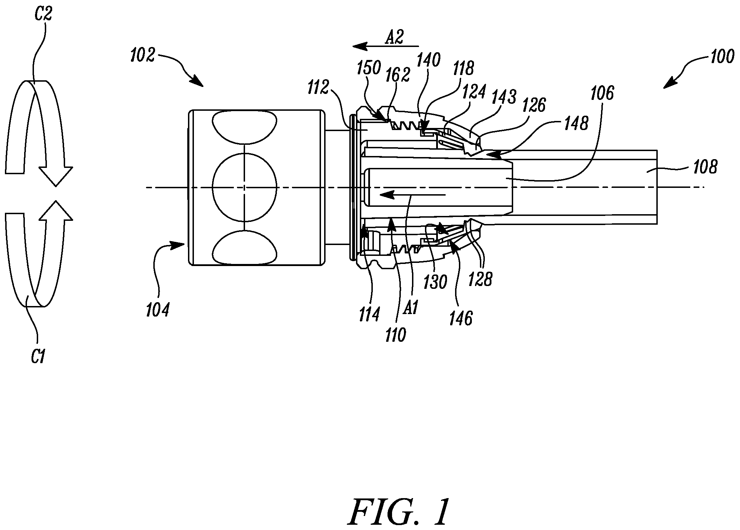

**FIG. 1** shows a sectional view of a hose connector **100,** according to an embodiment of the present invention. The hose connector **100** may be coupled with a water supply source (not shown) for performing a watering operation. For example, the water supply source may include a tap or a pump outlet. The hose connector **100** includes a body **102.** The body **102** defines a first end **104** that may be detachably coupled with the water supply source. The first end **104** may be generally tubular in shape. In one example, the first end **104** may include internal threads (not shown) that engage with external threads on the water supply source for detachably coupling the hose connector **100** with the source of water supply. In an alternate example, the hose connector **100** may be press fitted to the water supply source, without any limitations.

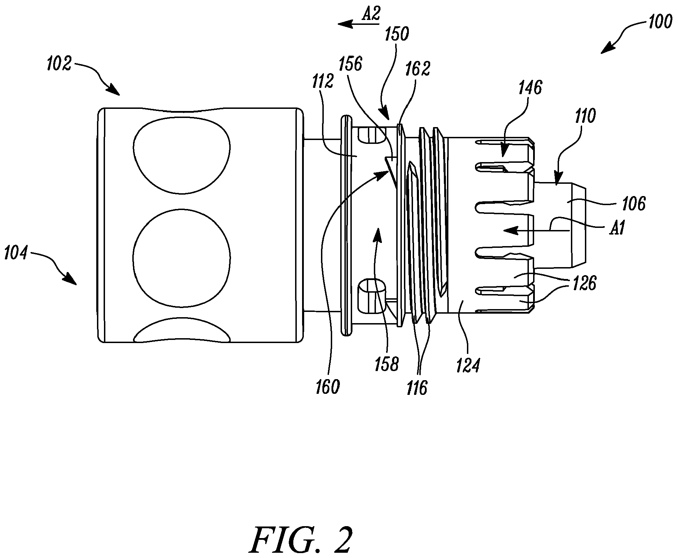

The body **102** includes a first body portion **106.** The first body portion **106** defines a fluid passage (not shown) that allows water from the water supply source to be introduced in a hose **108** that connects with the hose connector **100.** The hose **108** is received by the first body portion **106** such that the hose **108** contacts an outer surface **110** of the first body portion **106.** Further, the body **102** includes a second body portion **112.** The second body portion **112** is disposed concentrically around the first body portion **106.** More particularly, the first and second body portions **106, 112** are provided such that a gap **114** is defined between the first and second body portions **106, 112.** The hose **108** is received within the gap **114** defined between the first and second body portions **106, 112.** Further, the second body portion **112** has an annular shape. The second body portion **112** defines a number of external threads **116** (shown in **FIG. 2****).** Additionally, the second body portion **112** defines a sliding surface **118** disposed at one side of the number of external threads **116.**

Referring to **FIGS. 1** and **2****,** the hose connector **100** includes a clamping element **124.** The clamping element **124** includes a number of clamping claws **126.** Further, the clamping claws **126** include one or more teeth **128** that are defined on an inner surface **130** (shown in **FIG. 1****)** of the respective clamping claws **126.** In the illustrated embodiment, each clamping claw **126** includes two teeth **128** (shown in **FIG. 1****).** Alternatively, each clamping claw **126** may include more than two teeth **128,** without any limitations.

The clamping element **124** is coupled to the second body portion **112.** In one example, the clamping element **124** is captively coupled to the second body portion **112** through a snap fit arrangement so that the clamping element **124** does not unscrew or get stolen when the hose connector **100** is left unattended. The clamping element **124** is coupled to the second body portion **112** such that the clamping element **124** is slidable along an axial direction **"A1"** with respect to the second body portion **112.** More particularly, the clamping element **124** is slidably received on the sliding surface **118** thereby allowing an axial movement of the clamping element **124.** Additionally, the clamping element **124** and the second body portion **112** are designed such that the clamping element **124** tilts radially with respect to the second body portion **112.**

In one example, the clamping element **124** is molded on the body **102.** For example, an injection molding process may be used for molding the clamping element **124** on the hose connector **100.** Alternatively, a 2-K injection molding process or an assembly injection molding process may be used for molding the clamping element **124** on the hose connector **100.** In other examples, the clamping element **124** and the hose connector **100** may be manufactured as separate components that are later coupled with each other. As the clamping element **124** is manufactured using cost efficient techniques, the hose connector **100** does not incur significant component production costs. Additionally, installation costs and time associated with the assembly and disassembly of the clamping element **124** with the body **102** is reduced as the clamping element **124** is molded with the body **102.** Further, a material of the body **102** may be different from a material of the clamping element **124.** In an example, the clamping element **124** may be made of polyoxymethylene whereas the body **102** may be made of polypropylene, without any limitations.

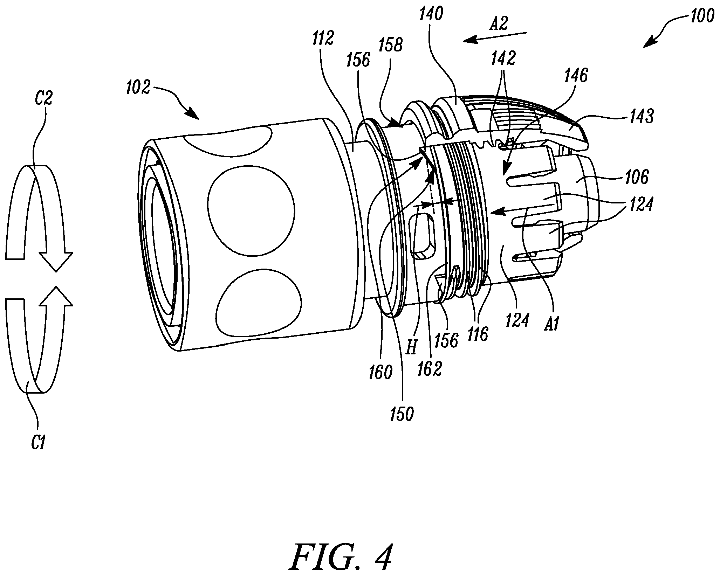

The hose connector **100** also includes a clamping nut **140.** The clamping nut **140** is threadably coupled to the second body portion **112.** Based on a rotation of the clamping nut **140** in a threading direction **"A2",** the clamping nut **140** may be engaged or disengaged from the second body portion **112.** The clamping nut **140** is shown in an engaged position in **FIG. 1** and in a disengaged position in **FIG. 4****.** The clamping nut **140** is said to be in the engaged position when internal threads **142** of the clamping nut **140** engage with the external threads **116** on the second body portion **112.** Further, the clamping nut **140** is said to be in the disengaged position when the internal threads **142** of the clamping nut **140** disengage from the external threads **116** on the second body portion **112.** The clamping nut **140** defines a clamping surface **144.** In the engaged position of the clamping nut **140,** the clamping surface **144** of the clamping nut **140** is spaced apart from an outer surface **146** of the clamping element **124.** Further, a stroke of the clamping nut **140** is greater than a stroke of the clamping element **124.** Thus, in the disengaged position of the clamping nut **140,** the hose **108** (see **FIG. 1****)** can be easily pushed or removed from the first body portion **106** as there is no self-reinforcing effect of the clamping element **124.**

Further, dimensions of the clamping nut **140,** the clamping element **124,** and the first body portion **106** is decided such that in a maximum tightened condition of the clamping nut **140,** a second gap **148** (see **FIG. 1****)** exists between the clamping element **124** and the first body portion **106.** This even in the situation when no hose is received within the gap between the first body portion **(106)** and the second body portion **(112)** In some examples, a value of this second gap **148** lies approximately between 0.75 mm and 1.5 mm. In one example, the value of the second gap **148** is approximately equal to 1 mm. thus the second gap **148** prevents plastic deformation of the clamping claws **126.**

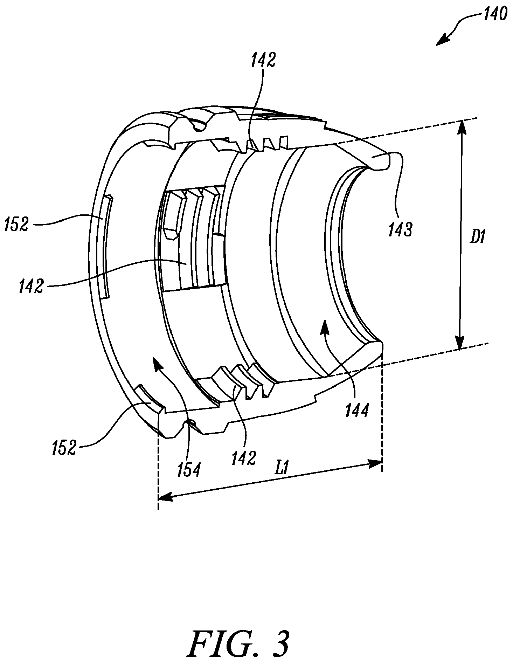

**FIG. 3** shows a sectional view of the clamping nut **140.** The clamping nut **140** includes the number of internal threads **142** that engage with the number of external threads **116** (see **FIGS. 2** and **4****)** on the second body portion **112** (see **FIGS. 1**, **2****,** and **4****)** to threadably couple the clamping nut **140** with the second body portion **112.** In the illustrated example, each of the internal threads **142** and the external threads **116** are embodied as sawtooth threads. Such sawtooth threads increase a holding force between the clamping nut **140** and the second body portion **112** thereby preventing overrunning of the threads **116, 142** during tightening of the clamping nut **140.** Additionally, in a preferred embodiment, the internal threads **142** are embodied as non-continuous threads. Such non-continuous internal threads **142** simplifies production of the clamping nut **140** as they allow easy removal of the internal threads **142** from a mold despite of a number of first ribs **152** that are provided on the second body portion **112.** Alternatively, the internal threads **142** may be embodied as continuous threads.

The clamping nut **140** defines an inner diameter **"D1".** The inner diameter **"D1"** of the clamping nut **140** is decided such that in the engaged position of the clamping nut **140,** the clamping nut **140** applies force on the clamping element **124** (see **FIG. 1****).** More particularly, the clamping nut **140** includes a tail portion **143,** such that the tail portion **143** applies force on the clamping element **124** when the clamping nut **140** is in the engaged position. As shown in **FIG. 4****,** the clamping nut **140** does not apply force on the clamping element **124** such that the clamping element **124** is in a retracted position when the clamping nut **140** is in the disengaged position. Additionally, a length **"L1"** of the clamping nut **140** is decided such that when a second rib **162** rests against the first ribs **152** (see **FIG. 3****),** the clamping nut **140** is in the disengaged position and the clamping claws **126** are in the retracted position.

Further, the hose connector **100** includes a coupling mechanism **150** for capturing the clamping nut **140** with the second body portion **112** in the engaged position of the clamping nut **140.** The coupling mechanism **150** described herein allows captive coupling of the clamping nut **140** with the second body portion **112** by a snap connection such that the clamping nut **140** is coupled with the second body portion **112** at all times. In a preferred embodiment, the coupling mechanism **150** includes the number of first ribs **152.** The first ribs **152** extend from an inner surface **154** of the clamping nut **140.** Each of the first ribs **152** are circumferentially spaced apart from each other on the inner surface **154.** In the illustrated embodiment, the coupling mechanism **150** includes four ribs **152.** Alternatively, the coupling mechanism **150** may include more than four ribs **152** or less than four ribs **152,** without any limitations. In another embodiment, the coupling mechanism **150** may include a single continuous first rib **152.**

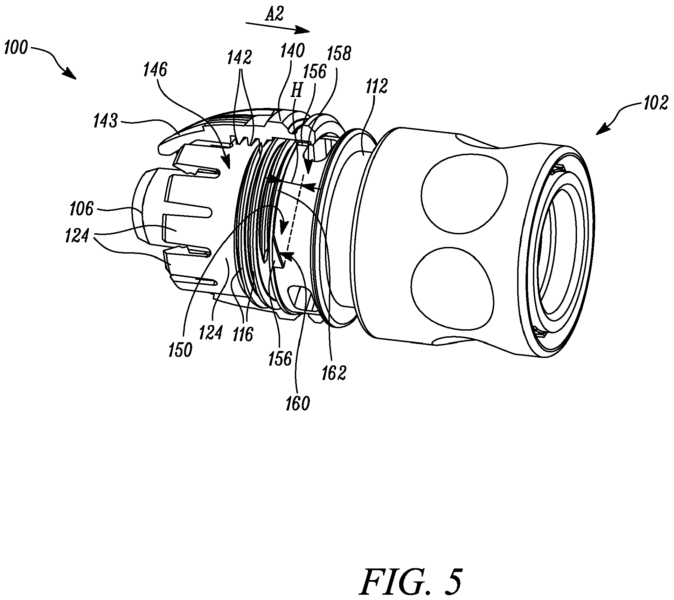

The coupling mechanism **150** also includes at least one cam **156** provided on the second body portion **112.** The cam **156** described herein aids in engaging the clamping nut **140** with the second body portion **112.** Each of the cams **156** define a sloping surface **160.** In the illustrated embodiment, the coupling mechanism **150** includes a number of cams **156.** More particularly, the coupling mechanism **150** includes four cams **156.** The cams **156** are circumferentially spaced apart from each other along an outer surface **158** of the second body portion **112.** Alternatively, the coupling mechanism **150** may include more than four cams **156** or less than four cams **156,** without any limitations. The cams **156** are triangular in shape. More particularly, the cams **156** have a wedge shape. Referring to **FIG. 5****,** the cams **156** define a height **"H".** The height **"H"** of the cams **156** is decided such that the height **"H"** corresponds to a pitch between adjacent threads **116** of the second body portion **112.** Further, as the height **"H"** of the cams **156** correspond to the pitch of the external threads **116,** the internal threads **142** are positioned at a start of the external threads **116,** based on a sliding of the first ribs **152** on the sloping surface **160.**

Further, the cams **156** serve as an end stop that notifies a user that the internal threads **142** of the clamping nut **140** have disengaged from the external threads **116** on the second body portion **112** and the hose **108** can be easily removed from the first body portion **106** as the clamping claws **126** (see **FIG. 1****)** no longer apply any force on the hose **108** (see **FIG. 1****).** Moreover, the cams **156** provide a haptic feedback to the user that the internal threads **142** of the clamping nut **140** have disengaged from the external threads **116** on the second body portion **112.** Additionally, the coupling mechanism **150** includes the second rib **162** provided on the outer surface **158** of the second body portion **112.** More particularly, the second rib **162** extends along the circumference of the second body portion **112.** The second rib **162** is embodied as a continuous rib.

The coupling mechanism **150** described herein is designed such that the clamping nut **140** does not accidentally decouple from the second body portion **112.** Therefore, any possibility of removal of the clamping nut **140** from the second body portion **112** even during normal hose operation is eliminated. Additionally, the coupling mechanism **150** allows captive connection of the clamping nut **140** with the second body portion **112.** Also, the captive connection between the clamping nut **140** and the second body portion **112** can be achieved without adding to an overall cost of the hose connector **100.** Further, the coupling mechanism **150** does not include a separate clamping ring and thus any possibility of losing or unscrewing of the clamping ring is eliminated. The coupling mechanism **150** also does not include additional cable ties or other such components as the hose connector **100** does not include the clamping ring.

As shown in **FIG. 1****,** for coupling the hose **108** with the hose connector **100,** the hose **108** is coupled with the first body portion **106.** As mentioned above, the clamping nut **140** is coupled with the second body portion **112** by the captive connection. For engaging the internal threads **142** of the clamping nut **140** with the external threads **116** on the second body portion **112,** the clamping nut **140** is rotated such that first ribs **152** slide against the cams **156.** More particularly, the first ribs **152** on the clamping nut **140** slide on the sloping surface **160** of the cams **156.** Based on the sliding of the first ribs **152** on the sloping surface **160,** the internal threads **142** of the clamping nut **140** are positioned at a start of the external threads **116** on the second body portion **112** as the height **"H"** of the cams **156** correspond to the pitch of the adjacent external threads **116.** Additionally, a further rotation of the clamping nut **140** causes the internal threads **142** to engage with the external threads **116.** It should be noted that the clamping element **124** is in the retracted position when the first ribs **152** rest against the second rib **162.**

The clamping nut **140** is then threadably coupled with the second body portion **112** by rotating the clamping nut **140** in a clockwise direction **"C1"** along the threading direction **"A2".** As the internal threads **142** of the clamping nut **140** engage with the external threads **116** on the second body portion **112,** the tail portion **143** of the clamping nut **140** applies force on the clamping claws **126.** Thus, the clamping claws **126** are in turn pressed radially inwards towards the hose **108,** thereby applying a holding force on the hose **108.**

Referring now to **FIG. 4****,** when the hose **108** (see **FIG. 1****)** is to be removed from the hose connector **100,** the clamping nut **140** is disengaged from the second body portion **112.** The clamping nut **140** is disengaged by rotating the clamping nut **140** in a counter clockwise direction **"C2"** along a direction that is opposite to the threading direction **"A2".** Further, a disengagement of the internal threads **142** of the clamping nut **140** and the external threads **116** on the second body portion **112** causes the clamping claws **126** to radially spring back to the retracted position as the tail portion **143** no longer applies force on the clamping claws **126.** A spring back action of the clamping claws **126** releases the holding force previously applied by the clamping claws **126** on the hose **108,** thereby allowing easy removal of the hose **108** from the first body portion **106.** Thus, once the internal threads **142** of the clamping nut **140** disengage from the external threads **116** on the second body portion **112,** the hose **108** can be easily removed from the first body portion **106.**

The hose connector **100** disclosed herein provides improved functional reliability. Further, components of the hose connector **100** do not require any prior assembly or disassembly hence the hose connector **100** allows simplified connection of the hose **108** with the hose connector **100.** The hose connector **100** allows simplified assembly and disassembly and is simple to use.

In the drawings and specification, there have been disclosed preferred embodiments and examples of the invention and, although specific terms are employed, they are used in a generic and descriptive sense only and not for the purpose of limitation of the scope of the invention being set forth in the following claims.

### LIST OF ELEMENTS

- **100**: Hose Connector
- **102**: Body
- **104**: First End
- **106**: First Body Portion
- **108**: Hose
- **110**: Outer Surface
- **112**: Second Body Portion
- **114**: Gap
- **116**: External Threads
- **118**: Sliding Surface
- **124**: Clamping Element
- **126**: Clamping Claws
- **128**: Teeth
- **130**: Inner Surface
- **140**: Clamping Nut
- **142**: Internal Threads
- **143**: Tail Portion
- **144**: Clamping Surface
- **146**: Outer Surface
- **148**: First Gap
- **150**: Coupling Mechanism
- **152**: First Ribs
- **154**: Inner Surface
- **156**: Cams
- **158**: Outer Surface of Second Body Portion
- **160**: Sloping Surface
- **162**: Second Rib
- **A1**: Axial Direction
- **A2**: Threading Direction
- **C1**: Clockwise Direction
- **C2**: Counter Clockwise Direction
- **D1**: Inner Diameter
- **L1**: Length
- **H**: Height of Cam

## Claims

1. A hose connector **(100)** comprising:
a body **(102)** including:
a first body portion **(106);** and
a second body portion **(112)** disposed concentrically around the first body portion **(106)** and defining a number of external threads **(116);**
wherein the first body portion **(106)** and the second body portion **(112)** define a gap **(114)** therebetween such that the gap **(114)** is adapted to receive a hose **(108)** therein;
a clamping element **(124)** coupled to the second body portion **(112),** wherein the clamping element **(124)** includes a number of clamping claws **(126);** and
a clamping nut **(140)** having threads to engage with the second body portion **(112)** via the external threads **(116)** when threaded onto it, the clamping nut **(140)** having a tail portion **(143),** wherein in an engaged position of the clamping nut **(140),** the tail portion **(143)** is adapted to apply force on the clamping element **(124);**
the clamping nut **(140)** further including at least one first rib **(152)** extending from an inner surface **(154)** of the clamping nut **(140),** wherein the at least one first rib **(152)** extends circumferential on the clamping nut **(140);**
wherein the hose connector **(100)** further includes a coupling mechanism **(150)** for capturing the clamping nut **(140)** with the second body portion **(112);** and
an inner diameter **(D1)** of the clamping nut **(140)** is defined such that:
the clamping nut **(140)** applies force on the clamping element **(124)** in the engaged position; and
the clamping nut **(140)** does not apply force on the clamping element **(124)** in a disengaged position;
**characterized in that:**
the second body portion **(112)** of the hose connector **(100)** includes a plurality of cams **(156)** defining a sloping surface **(160),**
wherein the at least one first rib **(152)** is adapted to slide on the sloping surface **(160)** of the plurality of cams **(156)** for coupling the clamping nut **(140)** with the second body portion **(112),**
with the height **(H)** of the cams **(156)** corresponding to the pitch of the adjacent external threads **(116).**

2. The hose connector **(100)** of claim 1, wherein the plurality of cams **(156)** includes at least four cams **(156).**

3. The hose connector **(100)** of claims 2, wherein each of the plurality of cams **(156)** are triangular in shape.

4. The hose connector **(100)** of any one of the preceding claims, wherein the cams **(156)** provide a haptic feedback to the user that the internal threads **(142)** of the clamping nut **(140)** have disengaged from the external threads **(116)** on the second body portion **(112).**

5. The hose connector **(100)** of any one of the preceding claims, wherein the first rib **(152)** is divided into a multitude of ribs, in particularly the first rib (152) is divided into at least four rib sections.

6. The hose connector **(100)** of any one of the preceding claims, wherein the second body portion **(112)** includes a second rib **(162)** extending along a circumference of the second body portion **(112).**

7. The hose connector **(100)** of claim 6, wherein the second rib **(162)** is embodied as a continuous rib.

8. The hose connector **(100)** of claims 6 or 7, wherein a length (**L1**) of the clamping nut **(140)** is decided such that the clamping claws **(126)** are in a retracted position when the second rib **(162)** rests against the plurality of first ribs **(152).**

9. The hose connector **(100)** of any one of the preceding claims, wherein the clamping nut **(140)** includes internal threads **(142)** that engage with external threads **(116)** on the second body portion **(112)** for threadably coupling the clamping nut **(140)** with the second body portion **(112),** in particular the internal threads **(142)** of the clamping nut **(140)** and the external threads **(116)** on the second body portion **(112)** being embodied as sawtooth threads.

10. The hose connector **(100)** of claim 9, wherein the internal threads **(142)** of the clamping nut **(140)** are embodied as non-continuous threads.

11. The hose connector **(100)** of any one of the preceding claims, wherein a clamping surface (144) of the clamping nut **(140)** is spaced apart from the clamping element **(124)** when the clamping nut **(140)** is coupled with the hose connector **(100).**

12. The hose connector **(100)** of any one of the preceding claims, wherein a second gap **(148)** is defined between the clamping element **(124)** and the first body portion **(106)** when the clamping nut **(140)** is threaded onto the hose connector **(100)** in a maximum tightened condition.

13. The hose connector **(100)** of claim 12, wherein a value of the second gap **(148)** lies approximately between 0.1 mm and 1.5 mm.

## Patentansprüche

1. Ein Schlauchverbinder (100), weist auf: einen Körper (102), der Folgendes umfasst:
einen ersten Körperabschnitt (106); und
einen zweiten Körperabschnitt (112), der konzentrisch um den ersten Körperabschnitt (106) angeordnet ist und eine Anzahl von Außengewinden (116) definiert;
wobei der erste Körperabschnitt (106) und der zweite Körperabschnitt (112) einen Spalt (114) dazwischen definieren, so dass der Spalt (114) eingerichtet ist, um einen Schlauch (108) darin aufzunehmen;
ein Klemmelement (124), das mit dem zweiten Körperabschnitt (112) gekoppelt ist, wobei das Klemmelement (124) eine Anzahl von Klemmklauen (126) aufweist; und
eine Spannmutter (140), die ein Gewinde aufweist, um mit dem zweiten Körperabschnitt (112) über das Außengewinde (116) in Eingriff zu kommen, wenn sie darauf geschraubt ist, wobei die Spannmutter (140) einen Endabschnitt (143) aufweist, wobei in einer Eingriffsposition der Spannmutter (140) der Endabschnitt (143) eingerichtet ist, um Kraft auf das Spannelement (124) auszuüben;
die Spannmutter (140) ferner mindestens eine erste Rippe (152) aufweist, die sich von einer Innenfläche (154) der Spannmutter (140) erstreckt, wobei sich die mindestens eine erste Rippe (152) in Umfangsrichtung der Spannmutter (140) erstreckt;
wobei der Schlauchverbinder (100) ferner einen Kupplungsmechanismus (150) zum Festhalten der Spannmutter (140) mit dem zweiten Körperabschnitt (112) aufweist; und
ein Innendurchmesser (D1) der Spannmutter (140) so definiert ist, dass:
die Spannmutter (140) in der Eingriffsstellung Kraft auf das Spannelement (124) ausübt; und
die Spannmutter (140) in einer gelösten Stellung keine Kraft auf das Spannelement (124) ausübt;
**dadurch gekennzeichnet, dass**:
der zweite Körperabschnitt (112) des Schlauchverbinders (100) eine Vielzahl von Nocken (156) aufweist, die eine schräge Fläche (160) definieren,
wobei die mindestens eine erste Rippe (152) so ausgelegt ist, dass sie auf der schrägen Fläche (160) der mehreren Nocken (156) gleitet, um die Spannmutter (140) mit dem zweiten Körperabschnitt (112) zu verbinden,
wobei die Höhe (H) der Nocken (156) der Steigung der benachbarten Außengewinde (116) entspricht.

2. Der Schlauchverbinder (100) nach Anspruch 1, wobei die Vielzahl von Nocken (156) mindestens vier Nocken (156) umfasst.

3. Der Schlauchverbinder (100) nach Anspruch 2, wobei jeder der Vielzahl der Nocken (156) eine dreieckige Form hat.

4. Der Schlauchverbinder (100) nach einem der vorhergehenden Ansprüche, wobei die Nocken (156) dem Benutzer eine haptische Rückmeldung geben, dass sich das Innengewinde (142) der Spannmutter (140) von dem Außengewinde (116) am zweiten Körperabschnitt (112) gelöst hat.

5. Der Schlauchverbinder (100) nach einem der vorhergehenden Ansprüche, wobei die erste Rippe (152) in eine Vielzahl von Rippen unterteilt ist, insbesondere die erste Rippe (152) in mindestens vier Rippenabschnitte unterteilt ist.

6. Der Schlauchverbinder (100) nach einem der vorhergehenden Ansprüche, wobei der zweite Körperabschnitt (112) eine zweite Rippe (162) aufweist, die sich entlang eines Umfangs des zweiten Körperabschnitts (112) erstreckt.

7. Der Schlauchverbinder (100) nach Anspruch 6, wobei die zweite Rippe (162) als durchgehende Rippe ausgebildet ist.

8. Der Schlauchverbinder (100) nach Anspruch 6 oder 7, wobei eine Länge (L1) der Spannmutter (140) so festgelegt ist, dass sich die Spannklauen (126) in einer zurückgezogenen Position befinden, wenn die zweite Rippe (162) an der Vielzahl der ersten Rippen (152) anliegt.

9. Der Schlauchverbinder (100) nach einem der vorhergehenden Ansprüche, wobei die Spannmutter (140) ein Innengewinde (142) aufweist, das mit einem Außengewinde (116) am zweiten Körperabschnitt (112) in Eingriff steht, um die Spannmutter (140) mit dem zweiten Körperabschnitt (112) schraubbar zu verbinden, wobei insbesondere das Innengewinde (142) der Spannmutter (140) und das Außengewinde (116) am zweiten Körperabschnitt (112) als Sägezahngewinde ausgebildet sind.

10. Der Schlauchverbinder (100) nach Anspruch 9, wobei das Innengewinde (142) der Spannmutter (140) als nicht durchgehendes Gewinde ausgebildet ist.

11. Der Schlauchverbinder (100) nach einem der vorhergehenden Ansprüche, wobei eine Klemmfläche (144) der Spannmutter (140) von dem Klemmelement (124) beabstandet ist, wenn die Spannmutter (140) mit dem Schlauchverbinder (100) verbunden ist.

12. Der Schlauchverbinder (100) nach einem der vorhergehenden Ansprüche, wobei ein zweiter Spalt (148) zwischen dem Klemmelement (124) und dem ersten Körperabschnitt (106) definiert ist, wenn die Spannmutter (140) in einem maximal angezogenen Zustand auf den Schlauchverbinder (100) geschraubt ist.

13. Der Schlauchverbinder (100) nach Anspruch 12, wobei ein Wert des zweiten Spalts (148) etwa zwischen 0,1 mm und 1,5 mm liegt.

## Revendications

1. Raccord de tuyau (100) comprenant :
un corps (102) incluant :
une première portion de corps (106) ; et
une seconde portion de corps (112) disposée concentriquement autour de la première portion de corps (106) et définissant un certain nombre de filets extérieurs (116) ;
dans lequel la première portion de corps (106) et la seconde portion de corps (112) définissent un espace (114) entre elles de sorte que l'espace (114) soit apte à recevoir un tuyau (108) à l'intérieur ;
un élément de serrage (124) couplé à la seconde portion de corps (112), dans lequel l'élément de serrage (124) inclut un certain nombre de griffes de serrage (126) ; et
un écrou de serrage (140) ayant des filets pour s'engager avec la seconde portion de corps (112) à travers les filets extérieurs (116) lorsqu'il est vissé sur celle-ci,
l'écrou de serrage (140) ayant une portion de queue (143), dans lequel dans une position engagée de l'écrou de serrage (140), la portion de queue (143) est apte à appliquer une force sur l'élément de serrage (124) ;
l'écrou de serrage (140) incluant en outre au moins une première nervure (152) s'étendant depuis une surface intérieure (154) de l'écrou de serrage (140), dans lequel l'au moins une première nervure (152) s'étend de manière circonférentielle sur l'écrou de serrage (140) ;
dans lequel le raccord de tuyau (100) inclut en outre un mécanisme de couplage (150) pour capturer l'écrou de serrage (140) avec la seconde portion de corps (112) ; et
un diamètre intérieur (D1) de l'écrou de serrage (140) est défini de telle sorte que :
l'écrou de serrage (140) applique une force sur l'élément de serrage (124) dans la position engagée ; et
l'écrou de serrage (140) n'applique pas de force sur l'élément de serrage (124) dans une position désengagée ;
**caractérisé en ce que** :
la seconde portion de corps (112) du raccord de tuyau (100) inclut une pluralité de cames (156) définissant une surface inclinée (160),
dans lequel l'au moins une première nervure (152) est apte à glisser sur la surface inclinée (160) de la pluralité de cames (156) pour coupler l'écrou de serrage (140) avec la seconde portion de corps (112),
la hauteur (H) des cames (156) correspondant au pas des filets extérieurs adjacents (116).

2. Raccord de tuyau (100) de la revendication 1, dans lequel la pluralité de cames (156) inclut au moins quatre cames (156).

3. Raccord de tuyau (100) de la revendication 2, dans lequel chacune de la pluralité de cames (156) est de forme triangulaire.

4. Raccord de tuyau (100) de l'une quelconque des revendications précédentes, dans lequel les cames (156) fournissent un retour haptique à l'utilisateur indiquant que les filets intérieurs (142) de l'écrou de serrage (140) se sont désengagés des filets extérieurs (116) sur la seconde portion de corps (112).

5. Raccord de tuyau (100) de l'une quelconque des revendications précédentes, dans lequel la première nervure (152) est divisée en une multitude de nervures, en particulier la première nervure (152) est divisée en au moins quatre sections de nervure.

6. Raccord de tuyau (100) de l'une quelconque des revendications précédentes, dans lequel la seconde portion de corps (112) inclut une seconde nervure (162) s'étendant le long d'une circonférence de la seconde portion de corps (112).

7. Raccord de tuyau (100) de la revendication 6, dans lequel la seconde nervure (162) est réalisée sous la forme d'une nervure continue.

8. Raccord de tuyau (100) des revendications 6 ou 7, dans lequel une longueur (L1) de l'écrou de serrage (140) est décidée de telle sorte que les griffes de serrage (126) sont dans une position rétractée lorsque la seconde nervure (162) repose contre la pluralité de premières nervures (152).

9. Raccord de tuyau (100) de l'une quelconque des revendications précédentes, dans lequel l'écrou de serrage (140) inclut des filets intérieurs (142) qui s'engagent avec des filets extérieurs (116) sur la seconde portion de corps (112) pour coupler par vissage l'écrou de serrage (140) avec la seconde portion de corps (112), en particulier les filets intérieurs (142) de l'écrou de serrage (140) et les filets extérieurs (116) sur la seconde portion de corps (112) étant réalisés comme des filets en dents de scie.

10. Raccord de tuyau (100) de la revendication 9, dans lequel les filets intérieurs (142) de l'écrou de serrage (140) sont réalisés sous forme de filets non continus.

11. Raccord de tuyau (100) de l'une quelconque des revendications précédentes, dans lequel une surface de serrage (144) de l'écrou de serrage (140) est éloignée de l'élément de serrage (124) lorsque l'écrou de serrage (140) est couplé au raccord de tuyau (100).

12. Raccord de tuyau (100) de l'une quelconque des revendications précédentes, dans lequel un second espace (148) est défini entre l'élément de serrage (124) et la première portion de corps (106) lorsque l'écrou de serrage (140) est vissé sur le raccord de tuyau (100) dans une condition de serrage maximal.

13. Raccord de tuyau (100) de la revendication 12, dans lequel une valeur du second espace (148) se situe approximativement entre 0,1 mm et 1,5 mm.
